# EUROPEAN PATENT APPLICATION

(11) **EP 1 538 011 A2**
(43) Date of publication of application: **08.06.2005**
(21) Application number: 04257237.0
(22) Date of filing: 22.11.2004
(51) Int. Cl.: B60H 1/00

(54) **Air conditioning system for work vehicles**

(30) Priority: 03.12.2003 JP 2003404429
(71) Applicant: Sanden Corporation, Isesaki-shi, Gunma 372-8502 (JP)
(72) Inventor: Isobe, Toshimi, c/o Sanden Corporation, Isesaki-shi, Gunma 372-8502 (JP)
(74) Representative: Haley, Stephen

(57) **Abstract**

An air conditioning system for work vehicles (1) having an inside air intake port (8) and an outside air intake port (9) characterized in that an inside air introduction amount restricting damper (10) for restricting an amount of inside air introduced into the air conditioning system is provided to the inside air intake port (8). In the air conditioning system, the inside of a cabin can be always maintained at a proper positive-pressure condition, and the level of the positive-pressure can be increased up to an optimum level in accordance with the working environment of the work vehicle.

## Description

The present invention relates to an air conditioning system for work vehicles, and, more specifically, to an air conditioning system suitable to be mounted in a work vehicle which is used under a working environment containing much dust.

Since a work vehicle is usually used at a condition of a working environment containing much dust, an air conditioning system capable of preventing dust invasion into a cabin, thereby improving safety and comfortableness of an operator, is required for the work vehicle, and recently, such requirements for improving the environment and comfortableness in the cabin have been increased.

For such requirements, for example, an air conditioning system for work vehicles having a function for introducing outside air is proposed (for example, JP-A-5-69278). In this proposal, a ventilation in a cabin is accelerated by introducing outside air cleaned through a filter from an outside air intake port into the cabin, and the inside of the cabin is maintained at a positive pressure by suppressing the amount of introduced inside air, thereby preventing the invasion of dust from outside into the cabin.

However, recently, a work vehicle is frequently used in an inferior environment containing much dust and many harmful substances such as in a treatment plant for industrial wastes. Therefore, it becomes more important to form a positive-pressure condition in a cabin by increasing the inside pressure of the cabin and maintain a proper environment condition in the cabin. In the proposal of the above-described JP-A-5-69278, however, because the rate of the amount of outside air introduced through an outside air intake port to the amount of inside air introduced through an inside air intake port is adjusted by a rotary operation of a single damper, it is impossible to adjust only an amount of air introduced through either one air intake port. Therefore, it is impossible to increase the positive pressure in the cabin in accordance with a usage environment of the work vehicle without changing the rate of the inside air introduction amount to the outside air introduction amount.

As a method for increasing the inside pressure of a cabin and increasing the level of the positive pressure, for example, although a method for opening an outside air intake port more widely, or a method for increasing an outside air introduction amount by making a blower larger, is considered, these methods obstruct to a directivity of making the system small and reducing the cost thereof.

Accordingly, it would be desirable to provide an air conditioning system for work vehicles which can always maintain a proper positive-pressure condition in a cabin in accordance with working environment, at a low cost without making the system large.

An air conditioning system for work vehicles according to the present invention has an inside air intake port for introducing air in a vehicle interior and an outside air intake port for introducing outside air, and the system is characterized in that an inside air introduction amount restricting damper for restricting an amount of inside air introduced into the air conditioning system is provided to the inside air intake port.

In such a structure, because an inside air introduction amount restricting damper for restricting an amount of inside air introduced into the air conditioning system is provided exclusively to the inside air intake port, only the inside air introduction amount may be controlled substantially freely, that is, independently. Therefore, the inside pressure of a cabin may be prevented from being decreased excessively accompanying with the introduction of inside air. Further, since the inside air introduction amount can be properly controlled by the inside air introduction amount restricting damper, the positive-pressure condition in the cabin may be increased up to an optimum pressure level in accordance with the usage environment of the work vehicle.

The inside air introduction amount restricting damper is preferably constructed as an exterior-type damper capable of being attached to the air conditioning system from outside of the air conditioning system. In the present invention, the "exterior-type damper" means a damper capable of being attached to the air conditioning system from outside of the air conditioning system having the inside air intake port, without disassembling the system. Even in the structure where such an exterior-type damper is provided as the inside air introduction amount restricting damper, because only a small space for rotating the damper may be ensured on the outside of the system, the system may be substantially prevented from becoming so large.

Further, it is possible to interlockingly drive the inside air introduction amount restricting damper and an outside air introduction amount adjusting damper for adjusting an amount of outside air introduced into the air conditioning system by a single drive means. By driving both dampers interlockingly by a single drive means, increase of the number of parts and a cost up accompanied therewith may be suppressed. Moreover, it is possible to control the increase/decrease of the inside air introduction amount in correspondence with the increase/decrease of the outside air introduction amount. Although the single drive means is not particularly limited, it may comprise an actuator.

Thus, in the air conditioning system for work vehicles according to the present invention, an exclusive inside air introduction amount restricting damper is provided to the inside air intake port, the inside pressure of a cabin may be prevented from being excessively reduced accompanying with the introduction of inside air, and the inside of the cabin may be always maintained at a proper positive-pressure condition. Further, the positive-pressure condition in the cabin may be increased up to an optimum level in accordance with the usage environment of the work vehicle.

Further features and advantages of the present invention will be understood from the following detailed description of the preferred embodiment of the present invention with reference to the accompanying figures, of which:
Fig. 1 is a partial side view of a work vehicle mounted with an air conditioning system for work vehicles according to an embodiment of the present invention.
Fig. 2 is a partial perspective view of the air conditioning system depicted in Fig. 1, showing a condition at an inside air circulation mode.
Fig. 3 is a partial perspective view of the air conditioning system depicted in Fig. 1, showing a condition at an outside air introduction mode.
Fig. 4 is a partial perspective view of an inside air introduction amount restricting damper of the air conditioning system depicted in Fig. 1.
Fig. 5 is a partial perspective view of an outside air introduction amount adjusting damper of the air conditioning system depicted in Fig. 1.

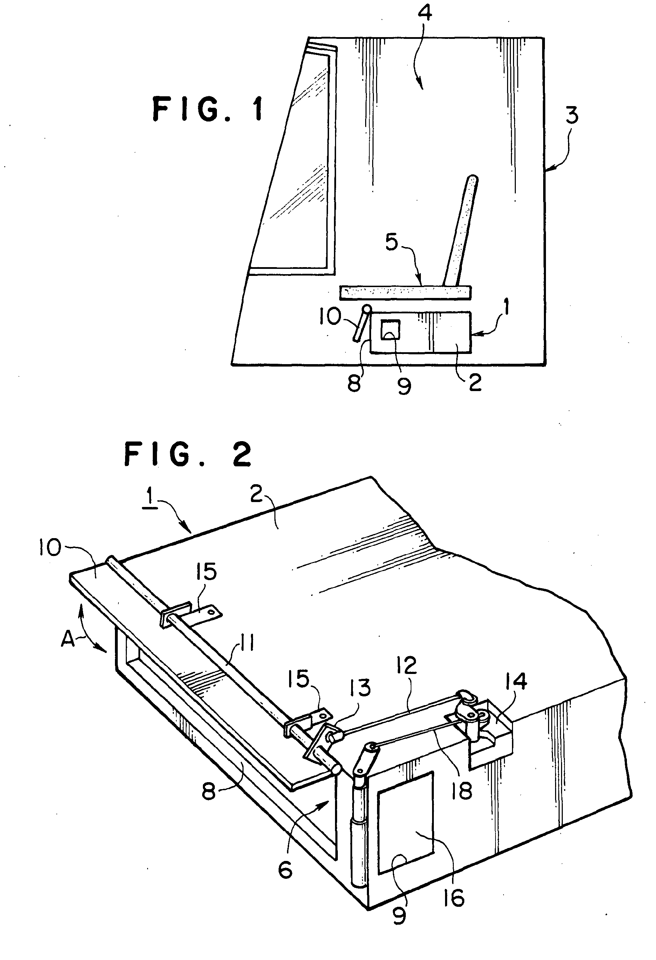

Figs. 1 to 5 show an air conditioning system for work vehicles according to an embodiment of the present invention. Air conditioning system for work vehicles 1 has an air conditioning unit 2, and the air conditioning unit 2 is provided under a seat 5 in a cabin 4 of a work vehicle 3 as depicted in Fig. 1. By the operation of air conditioning system 1, the inside of cabin 4 is always maintained at a positive-pressure condition, and dust from outside is prevented from entering into cabin 4.

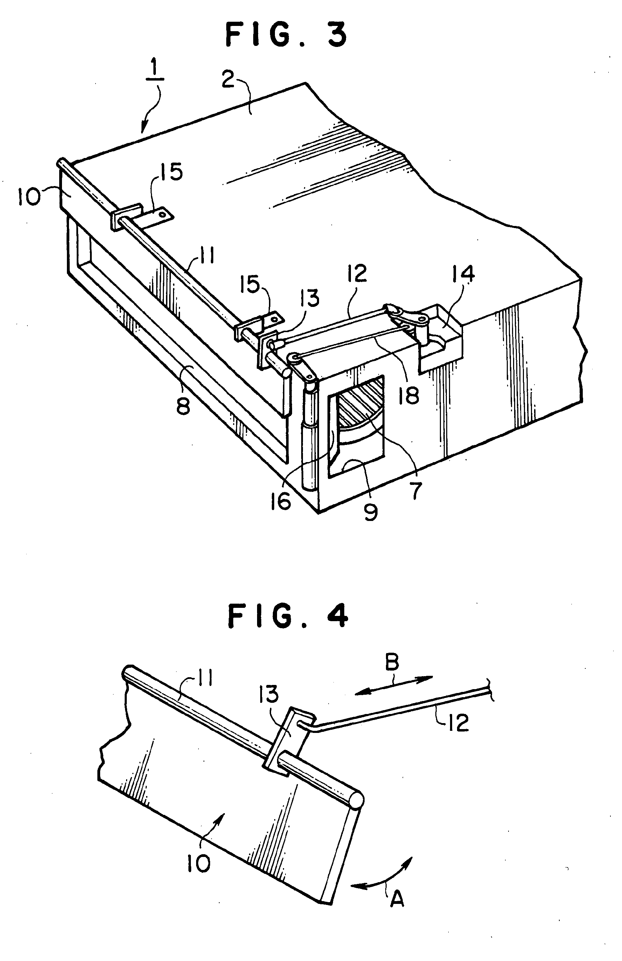

An air path 6 (shown in Fig. 2) is formed in air conditioning unit 2, and a blower 7 (shown in Fig. 3), a heat absorbing heat exchanger (not shown) and a heat radiating heat exchanger (not shown) are disposed in air path 6 in this order in the air-flow direction.

An inside air intake port 8 for introducing air in a vehicle interior (air in cabin 4) and an outside air intake port 9 for introducing outside air are provided to air conditioning unit 2. An inside air introduction amount restricting damper 10 for restricting an amount of inside air introduced into air conditioning unit 2 of air conditioning system 1 is provided to inside air intake port 8. Inside air introduction amount restricting damper 10 has a rotary shaft 11, and it is rotated around rotary shaft 11 in the direction indicated by arrow A. A lever 13 is fixed to rotary shaft 11, lever 13 is pivotably connected to one end of a rod 12, and the other end of rod 12 is connected to an actuator 14 provided as a drive means for driving damper 10. When the drive force of actuator 14 is transmitted to rod 12, rod 12 is moved in the direction indicated by arrow B in Fig. 4, and accompanying with this movement of rod 12, damper 10 is rotated around rotary shaft 11 via lever 13. Rotary shaft 11 is supported by air conditioning unit 2, rotatably via supporting members 15.

Fig. 2 shows a so-called inside air circulation mode, at which inside air intake port 8 is fully opened by the rotation of inside air introduction amount restricting damper 10, and outside air intake port 9 is closed. On the other hand, Fig. 3 shows a so-called outside air introduction mode (pressurization mode), at which inside air intake port 8 is fully throttled by inside air introduction amount restricting damper 10, and outside air intake port 9 is opened. As is evident from Fig. 3, in this embodiment, even in the outside air introduction mode, a part of inside air intake port 8 (about a half) is opened, and whereby, the ventilation of inside air may be performed. Further, in such a structure of inside air introduction amount restricting damper 10, the space for rotating the damper 10 may be greatly decreased. Where, inside air introduction amount restricting damper 10 may be constructed as a damper capable of completely closing inside air intake port 8 at the outside air introduction mode.

In this embodiment, all of inside air introduction amount restricting damper 10, rod 12, lever 13 and supporting members 15 can be attached to air conditioning unit 2 from outside (that is, at an exterior attachment style), without disassembling the air conditioning unit 2.

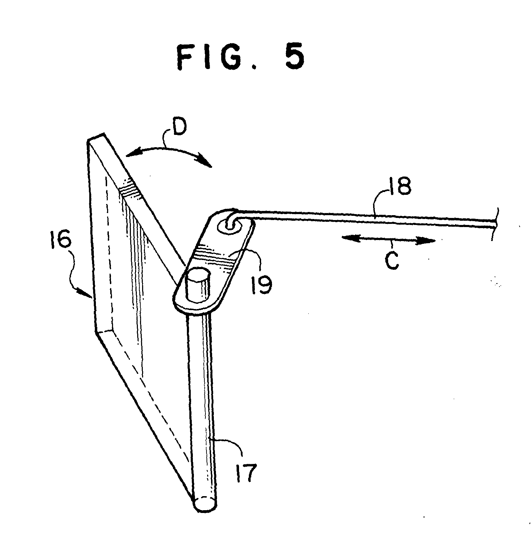

An outside air introduction amount adjusting damper 16 is provided to outside air intake port 9 for opening/closing the outside air intake port 9 and adjusting the amount of outside air to be introduced. Where, filter(s) (not shown) are provided at an upstream position and/or a downstream position of outside air intake port 9, and the dust and other harmful substances in the introduced outside air may be trapped by the filter(s), thereby increasing the clean degree of the outside air. A rotary shaft 17 (shown in Fig. 5) is provided to outside air introduction amount adjusting damper 16, a lever 19 is fixed to the rotary shaft 17, and the lever 19 is pivotably connected to one end of a rod 18 the other end of which is connected to actuator 14. Rotary shaft 17 is rotatably supported by air conditioning unit 2. When the drive force of actuator 14 is transmitted to rod 18, the rod 18 is moved in the direction indicated by arrow C in Fig. 5, accompanying with this movement, damper 16 is rotated around rotary shaft 17 in the direction indicated by arrow D, and the opening degree of outside air intake port 9 is adjusted by the rotation of damper 16, thereby adjusting the amount of outside air to be introduced.

In this embodiment, both rods 12 and 18 can be moved simultaneously by actuator 14 by respective required amounts, and both dampers 10 and 16 are interlockingly driven. Namely, in this embodiment, by actuator 14 provided as a single drive means, inside air introduction amount restricting damper 10 and outside air introduction amount adjusting damper 16 are both driven interlockingly. However, it is possible to provide each drive means for each damper, and to drive respective dampers independently from each other.

In the above-described embodiment, since inside air introduction amount restricting damper 10 is provided to inside air intake port 8 exclusively for restricting the amount of inside air to be introduced, only the opening degree of the inside air intake port 8 can be controlled substantially freely. Therefore, for example, at the inside air circulation mode shown in Fig. 2, by restricting the amount of inside air introduced through inside air intake port 8, an inconvenience, such that the inside pressure of cabin 4 reduces excessively and a proper positive-pressure condition is damaged, may be appropriately prevented. Further, in this mode, by greatly restricting the amount of inside air introduced through inside air intake port 8 by inside air introduction amount restricting damper 10, the inside pressure of cabin 4 may be raised to be higher, and the positive-pressure level in the cabin 4 may be controlled more properly. Thus, since the positive-pressure level in the cabin 4 can be increased in accordance with the usage environment of work vehicle 3, even if the work vehicle 3 is used in an inferior environment such as in a treatment plant for industrial wastes, it may be surely prevented that dust and harmful substances enter into the cabin 4.

Further, because inside air introduction amount restricting damper 10, rod 12, lever 13, etc. are provided so as to be attached from outside of air conditioning unit 2, the structure according to the present invention may be applied also to a present air conditioning system for work vehicles which does not have an exclusive inside air introduction amount restricting damper, easily without changing the design greatly.

Furthermore, since inside air introduction amount restricting damper 10 and outside air introduction amount adjusting damper 16 are interlockingly driven by a single actuator 14, it is not necessary to provide a separate drive means to each damper. Therefore, a cost up for providing both drive means may be greatly suppressed.

Thus, the present invention may be broadly applied to an air conditioning system for work vehicles, and particularly, it is effective as an air conditioning system for a work vehicle which is used in an inferior environment such as in a treatment plant for industrial wastes.

## Claims

1. An air conditioning system for work vehicles having an inside air intake port for introducing air in a vehicle interior and an outside air intake port for introducing outside air **characterized in that** an inside air introduction amount restricting damper for restricting an amount of inside air introduced into said air conditioning system is provided to said inside air intake port.

2. The air conditioning system for work vehicles according to claim 1, wherein said inside air introduction amount restricting damper is constructed as an exterior-type damper capable of being attached to said air conditioning system from outside of said air conditioning system.

3. The air conditioning system for work vehicles according to claim 1 or 2, wherein an outside air introduction amount adjusting damper for adjusting an amount of outside air introduced into said air conditioning system is provided to said outside air intake port.

4. The air conditioning system for work vehicles according to claim 3, wherein said inside air introduction amount restricting damper and said outside air introduction amount adjusting damper are provided so as to be driven interlockingly by a single drive means.

5. The air conditioning system for work vehicles according to claim 4, wherein said drive means comprises an actuator.
